(19) Europäisches Patentamt
European Patent Office
Office européen des brevets

(11) **EP 2 950 598 A1**

(12) **EUROPEAN PATENT APPLICATION**

(43) Date of publication:
**02.12.2015 Bulletin 2015/49**

(51) Int Cl.:
*H04W 64/00* (2009.01)   *H04W 24/02* (2009.01)

(21) Application number: **14290158.6**

(22) Date of filing: **30.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**92100 Boulogne-Billancourt (FR)**

(72) Inventors:
• **Razavi, Rouzbeh**
  **15 Dublin (IE)**
• **Bulja, Senad**
  **Dublin 15 (IE)**

(74) Representative: **Greenwood, Matthew David et al**
**Bryers LLP**
**7 Gay Street**
**Bath BA1 2PH (GB)**

(54)   **Method and apparatus for selecting a position for a low power node in a wireless telecommunications system**

(57)   A method for selecting a position for a low power node in a wireless telecommunications system, the low power node having an estimated potential area of radio coverage at a location within the radio coverage area of a base station node of the system, the method comprising receiving an uplink signal from a UE in uplink communications with the base station node at a dummy node at the location and incrementing a counter to register the presence of the UE when the power of the received uplink signal exceeds a threshold power value for a predeter- mined period of time.

FIGURE 3

EP 2 950 598 A1

**Description**

TECHNICAL FIELD

Aspects relate, in general, to a method and apparatus for selecting a position for a low power node in a wireless telecommunications system.

BACKGROUND

Small cell networks, by virtue of their reduced coverage range, low cost and high performance, are a potentially industry-changing disruptive shift in technology for radio access in cellular networks. Their coverage range implies that the spectrum efficiency that can be attained is much greater than that achievable using macrocells alone. In addition, the low costs associated with small cells means they can be deployed as consumer equipment, effectively reducing the capital load and operating expenses of the host network.

Further, owing to the enhanced link budgets due to the close proximity of the transmitter and the receiver, improved services and higher data rates can be realised. While operating small cells on a dedicated frequency is possible, co-channel operation with an existing macrocellular network is more technically challenging, but is also more rewarding for operators due to the potentially significantly increased spectral efficiency per area through spatial frequency re-use.

For outdoor small cell deployments, co-channel operation is challenging. The optimal configuration of small cells when deployed on the same frequency as an underlying macrocell is of great importance. Moreover, with dense future deployment of such cells, inter-small cell interference could also be significant and require cells to be configured optimally. Typically however, small cells are deployed without prior planning, and so although they potentially improve network-wide performance, their deployment can also result in increased interference.

SUMMARY

According to an example, there is provided a method for selecting a position for a low power node in a wireless telecommunications system, the low power node having an estimated potential area of radio coverage at a location within the radio coverage area of a base station node of the system, the method comprising receiving an uplink signal from a UE in uplink communications with the base station node at a dummy node at the location, and incrementing a counter to register the presence of the UE when the power of the received uplink signal exceeds a threshold power value for a predetermined period of time. The threshold power value can be determined using a measure of the power of an uplink signal received at the location from a UE in uplink communications with the base station node at the edge of the estimated potential area of radio coverage. The estimated potential area of radio coverage can be determined using: a value for a pilot signal from the base station node at the location and a notional transmit power of the low power node at the location. The duration of the received uplink signal can be used to generate a measure representing the total time that the UE is present within the estimated potential area of radio coverage.

According to an example, there is provided apparatus for use in selecting a position for a low power node to be deployed in a wireless telecommunications system, the low power node having an estimated potential area of radio coverage at a location within the radio coverage area of a base station node of the system, the apparatus including a receiver at the location to receive an uplink signal from a UE in uplink communications with the base station node and a counter to register the presence of the UE if the power of the received uplink signal exceeds a threshold power value for a predetermined period of time. The apparatus can include a mixer to mix multiple components of the received uplink signal to form a mixed signal, and a low pass filter to filter out components of the mixed signal of order higher than second order to generate a DC signal. The mixer can mix the sum of the multiple components to generate a mixed signal according to:

$$\text{mixed signal} = \sum_{i=1}^{n} a_i \left(V_{sum}\right)^i$$

The mixer can mix two components of equal amplitude and phase split from the received uplink signal using a coupling device. The coupling device can split the received uplink signal into two 3dB signal components $V_{3dB\_1}$ and $V_{3dB\_2}$, the magnitudes of which $V_{3dB\_1\_M}$ and $V_{3dB\_2\_M}$, are values that can be input to the mixer. A limiter can be provided to generate a constant amplitude DC signal if the DC signal is greater than a threshold voltage value representing a measure of the power of an uplink signal received at the location from a UE in uplink communications with the base station node at the edge of the estimated potential area of radio coverage. An integrator to generate a variable output voltage signal whose amplitude increases with the duration of the constant amplitude DC signal received from the limiter can be provided. A comparator to compare the output voltage with a predefined reference voltage, $V_{ref}$, representing the predetermined period of time can be provided. The comparator can generate an output if the output voltage is greater than the predefined reference voltage. The variable output voltage signal of the integrator can be tuned using a time constant. The variable output voltage signal of the integrator can be set using the time constant whereby to provide a linear ramp signal as the output.

BRIEF DESCRIPTION OF THE DRAWINGS

Embodiments will now be described, by way of example only, with reference to the accompanying drawings, in which:

Figures 1a-d are schematic representations of four scenarios in which a small cell is deployed on the same carrier as the underlying macrocell;

Figure 2 is a schematic illustration of the effective coverage radius of a small cell node as function of the distance to an underlying macrocell base station according to an example;

Figure 3 is a schematic representation of a system according to an example;

Figure 4 is a schematic representation of apparatus according to an example;

Figure 5 is a schematic representation of a circuit for a device to be deployed with or as part of apparatus as depicted in figure 4 according to an example; and

Figures 6a and 6b are schematic representations of waveforms for $V_{ref}$ and $V_{int\_out}$ in the case of a positive user detection and negative user detection respectively.

DESCRIPTION

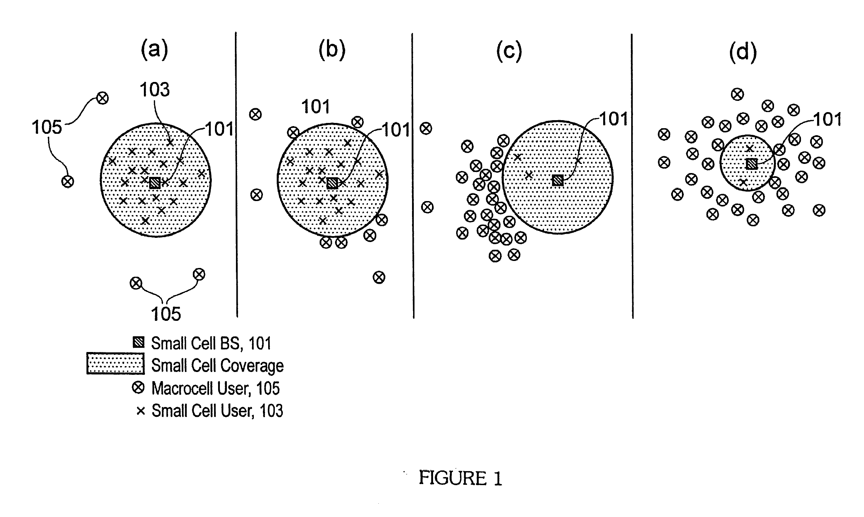

Example embodiments are described below in sufficient detail to enable those of ordinary skill in the art to embody and implement the systems and processes herein described. It is important to understand that embodiments can be provided in many alternate forms and should not be construed as limited to the examples set forth herein.
Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.
The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.
Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.
In general, if the offloading gain from a small cell base-station, also known as a low power node, is less significant compared to its interference impact, the small cell base-station can be considered as a burden on the network. Figures 1a-d are schematic representations of four scenarios in which a small cell is deployed on the same carrier as the underlying macrocell. As used herein, a "basestation" is considered a node of a telecommunications network, having a corresponding macro (or, as the case may be metro, small or other) cell. It will be appreciated that the node may comprise a basestation alone or incorporate it with other devices. More particularly, in an example, a small cell base station or node can be a dummy node with limited functionality, but which includes a device that can be used for determining the presence of user equipment (UE) at a location within the radio coverage area of a low power node to be deployed in a wireless telecommunications system. As such, a dummy node can include a sniffer device as described in more detail below, and can be operable to receive a signal output from a UE device, such as an uplink signal that is transmitted by a UE in uplink communications with a macro cell base station for example, and transmit a pilot signal.

According to an example, such a dummy node can be used to generate a measure from a received signal that indicates the presence of a UE within a radio coverage area that would be effective if a small cell node proper were deployed at the location at which the dummy node is positioned. That is, the dummy node can be used to determine the number of users that could have benefitted from traffic offloading to a small cell at the location. As such, the selection of a position for a low power node in a wireless telecommunications system can be improved as a dummy node can provide data related to the number of users that could benefit from such a node at the position in question. For example, the number of users that would benefit, and/or the duration that a user is present within the estimated potential area of radio coverage of the node.

Figure 1a depicts a case where small cell 101 can offload large number of users 103 without imposing significant interference to macrocell users 105. The case shown in Figure 1b is less ideal but can be considered broadly acceptable. Here, although there are a number of macrocell users 105 at the edge of the small cell 101 which may be affected by the interference from the small cell, the offloading gain of the small cell is still significant. The improper placement of small cell in figure 1c results in many macrocell users 105 being affected by small cell 101 whilst the users' capture rate is insignificant. Finally, mal-configuration of the small cell coverage settings (e.g. pilot power) in Figure 1d results in marginal offload gain and considerable interference imposed to large number of users.

Accordingly, with typical small cells having a radio coverage radius of only a few tens of metres, planning their placement requires a precision that is typically not possible with traditional techniques and by using cell level traffic information. In fact, it is typically necessary for mobile operators to geo-locate traffic down to a building level resolution in order to be able to select candidate sites for small cell bases stations that will deliver the greatest business impact by directly targeting traffic hotspots.

A dummy base-station can be placed in a potential hotspot area. From a users' perspective, such a device can appear as a fully functional node for a small cell since it can be made to transmit a pilot power. Once a user is in the coverage range of any of these 'dummy' cells, it can send a handover request to that cell. Typically, the cell rejects the handover request but records the event. The operator can subsequently collect the dummy base-stations and based on the intensity of handover requests that have been recorded, can decide where to place the actual (functional) small cell base-stations.

The dummy base-stations typically need to be configured to have the correct cell ID. Otherwise cell ID confusion/collision may occur. Also, such devices can only capture handover requests without any knowledge of whether the user in question will stay in the coverage area of the cell. This is especially important information since it is desirable to deploy small cells in locations where static users are a primary target for traffic offloading. Finally, effort is needed to download all information from the dummy base-station and to post-process them.

Thus, according to an example, there is provided a mechanism for placement of low power (or small cell base station) nodes that is based on monitoring uplink traffic to estimate users' presence. An apparatus according to an example can be triggered when a user is believed to be located in the potential coverage area of a small cell. That is, for example, a dummy node including apparatus for determining the presence of a UE can be deployed at a location in order to determine if a small cell with a potential radio coverage area deployed at that location would be advantageous.

More specifically, according to an example there is provided a method for selecting a position for a low power node in a wireless telecommunications system, the low power node having an estimated potential area of radio coverage at a location within the radio coverage area of a base station node of the system, in which the method comprises deploying a dummy node at the location, the dummy node operable to receive an uplink signal from a UE in uplink communications with the base station node, and incrementing a counter to register the presence of the UE if the power of the received uplink signal exceeds a threshold power value for a predetermined period of time.

The estimated potential area of radio coverage at the location can be the same as the radio coverage area of a fully functional small cell at the same location, such that an accurate measurement of the benefits of selecting the location for small cell base station deployment can be obtained.

The dummy node can have some basic LPN functionality, such as being able to receive signals from user equipment (UE) within range and being able to transmit a pilot signal for example. The dummy node includes apparatus with a timing component that can time and/or register the presence of a UE if the power of a received uplink signal (from a UE in uplink communications with the base station node) is greater than a threshold power value. A measure for uplink power received at the dummy node from a UE which is in uplink communications with the macro node at the edge of the potential area of radio coverage of the dummy node can be used to set the threshold power value. In an example, the apparatus can continually monitor for uplink signals or can periodically monitor for uplink signals. It can also be activated if the threshold power signal is exceeded. Alternatively, it can process a received uplink signal below the threshold, but such a signal will fail to register the presence of a UE as it is below the threshold, as will be explained in more detail below.

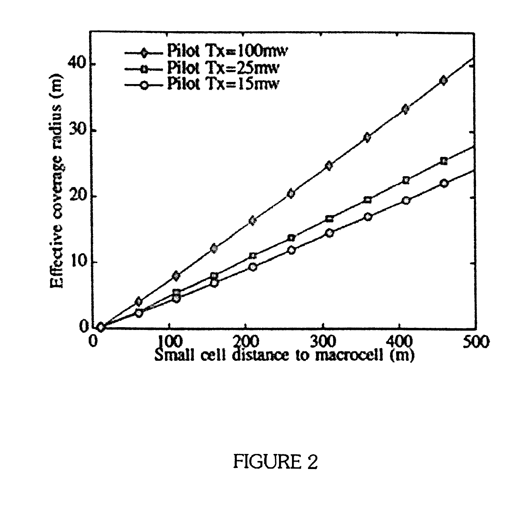

Considering co-channel deployment of small cells within the radio coverage area of a macro node of a system, the radio coverage area of the small cell is dependent on the macrocell transmit power (i.e. RSCP) received at the small cell node as well as pilot transmit power of the small cell node itself. In this connection, figure 2 is a schematic illustration of the effective coverage radius of a small cell node as function of the distance to an underlying macrocell base station according to an example. The coverage is larger at the edge of the macrocell and the effective coverage radius increases linearly with the distance to the underlying macrocell. The results are shown for different small cells pilot power values as indicated in the key of figure 2.

According to an example, selecting a position for a low power node in a wireless telecommunications system is dependent on the potential radio coverage radius/area of the small cell to be deployed at a given location within the radio coverage of a macro base station. This can be determined by constructing a lookup table (similar to Figure 2) from which the potential coverage area of a small cell can be estimated given the power of a received pilot signal from the macro cell and the transmit pilot power of the small cell.

Once estimated, the transmit power of UE communicating to the macrocell at a location at the small cell border can be estimated based on the downlink path loss for example. Alternatively, a more accurate procedure that can be used to estimate the transmit power of UE communicating to the macrocell at a location at the small cell border is to initiate a call to the macrocell network from a UE at the edge of the small cell and to record the received UE power at the small cell location. This provides a threshold value representing the power of a signal for a UE communicating in the uplink to a macro cell at the border of a small cell that is to be deployed. A signal with a value below this therefore originates from a UE which is outside of the potential area of radio coverage of the small cell, and which would therefore not benefit from the small cell. Conversely, a signal with a power that exceeds this threshold can be taken to originate from a UE within the potential area of radio coverage of the small cell.

According to an example, once this threshold is determined, a timing component, which can be part of the dummy node, can be used to register the presence of a UE within the potential area of radio coverage of a small cell. That is, if the detected power of an uplink signal from a UE exceeds the threshold value, and continues to do so for a predetermined period of time, the timing component can register the presence of the UE. If the threshold is not exceeded, or fluctuates so as to fall below the threshold before the end of the predetermined period of time, the UE will not be registered. This way the dummy node can effectively measure the total active time of a cell, should a small cell be placed in the location in question.

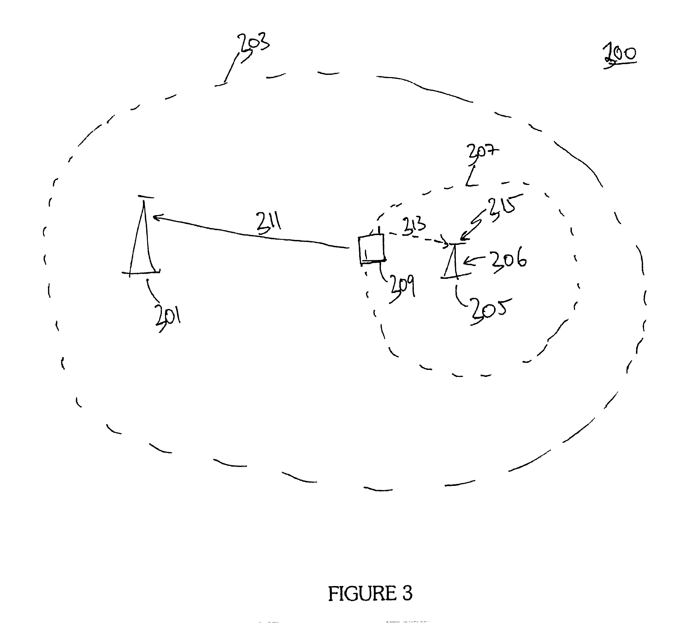

Figure 3 is a schematic representation of a system according to an example. A wireless telecommunications system 300 includes a macro cell base station (node) 301 that serves a given area, known as a cell 303. That is, the radio coverage area of the macro cell base station 301 is the area depicted by 303. In order to select a location within cell 303 for a small cell served by a low power node for example, a dummy node 305, which acts as a dummy small cell base station, can be placed at a location 306 within cell 303. The dummy node 305 has an estimated potential area of radio coverage 307 at the location 306 determined as explained above.

A UE device 309 is in uplink communications 311 with base station 301. UE 309 is at the edge of the potential area of radio coverage 307 of the dummy node 305. The area 307 represents the potential radio coverage area of a small cell base station if it were deployed at position 306. The uplink signal 311 will also be received at the node 305. The signal 313 is received at the node 305 using a receiver 315 of the node 305, such an antenna.

Due to the high sensitivity of path loss to distance for small cells (high exponential coefficient in the path loss model due to the environment and non-line-of-sight path losses), the effect of other macrocell users that are not in the indented coverage area 307 of the small cell is marginal. Moreover, since small cells are designed mainly to offload static users, the timer is not activated unless a given "time to trigger" value is elapsed, which avoids capturing UE devices that are passing by/through.

In addition to capturing the total time of users' activity, the dummy node 306 can further record the number of times it has been triggered, which corresponds to the number of users that could have been offloaded to a small cell base station. This information can be made available on a separate display unit of the node 306. Using such low cost displays can help operators as it minimizes the post-processing efforts needed to analyze the data and to decide where to deploy small cells. In addition, there might be some inaccuracies involved due to burstiness of the uplink traffic, but since such devices can be realized with low costs, they can be deployed at a number of candidate locations (based on the backhaul availability for example) and the best location can be then selected.

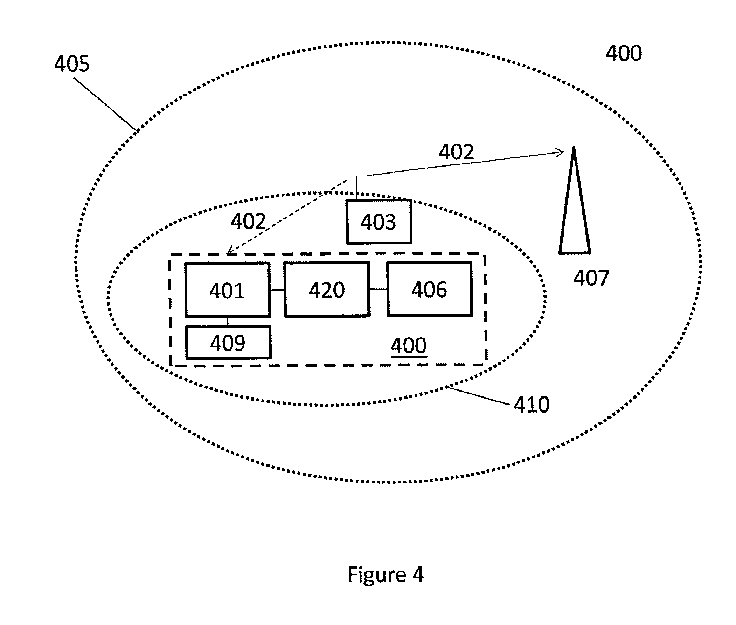

Figure 4 is a schematic representation of an apparatus according to an example. Apparatus 400 is in the form of a dummy node, and includes a receiver 401 to receive an uplink signal 402 from a UE 403 within the radio coverage area 405 of a base station node 407 of a wireless telecommunications system. Apparatus 400 is at a location within area 405 at which a low power node deployed at the location would have an estimated potential area of radio coverage 410.

A timing component 420, which is described in more detail herein below, is provided. Timing component 420 is operable to register the presence of the UE 403 if the uplink signal 402 that is received from the UE 403 is above a threshold power value for a predetermined period of time that can be set by a user. In an example, the presence of UE 403 is registered by incrementing a counter 406. The time that UE 403 is within the area 410 can also be measured using the timing component 420. In an example, this duration is the same as the duration of the received signal 402 whilst it is above the threshold power value.

Accordingly, the timing component 420 can begin timing from the point at which the uplink signal 402 received from UE 403 is above the threshold. The timing component 420 increments the counter 406 if time that the signal is continuously above the threshold exceeds a predetermined value. In this way, UE devices that may only be temporarily within range of the dummy node 400, or present for a time less than the predetermined value, are not counted.

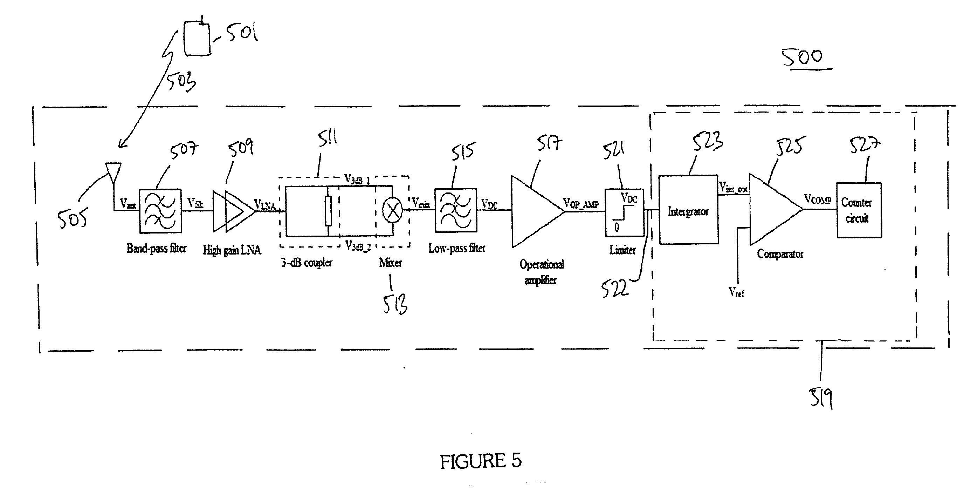

Figure 5 is a schematic representation of a circuit for a device to be deployed with or as part of apparatus as depicted in figure 4 according to an example. The device 500 is used to determine the presence of a UE 501 within the potential area of radio coverage of a low power node to be deployed at a location within a system as shown in figures 3 and 4. A UE device 501 is in uplink communications with a base station node 301, 407 of a system 300, 400 as depicted in figures 3 and 4. The UE device 501 can be in the proximity of the device 500, and thus the uplink signal from UE 501 to a base station node of the system is also received at device 500.

In an example, the signal 503 is received at an antenna 505 of the device 500, which acts as the receiver 401. The signal 503 received at antenna 505 can be represented as a voltage value, $V_{ant}$, as is typical. In an example, this value is passed through a bandpass filter 507 so as to eliminate signals at unwanted frequencies, but also to protect a High gain Low Noise Amplifier (LNA) 509 from wideband noise. The filtered signal, $V_{filt}$, which results from filtering of the signal $V_{ant}$ is amplified using the high gain LNA 509, which is used to boost the low power received signal level. The amplified signal, $V_{LNA}$, is then split into two equal in amplitude and phase components, $V_{3dB\_1}$ and $V_{3dB\_2}$, using a 3dB coupler 511, and the two components are subsequently mixed using a mixer 513.

The mixing operation has the function of multiplying the two signals, $V_{3dB\_1}$ and $V_{3dB\_2}$, (which have magnitudes equal to $V_{3dB\_1\_M}$ and $V_{3dB\_1\_M}$) in the following way to generate a mixed signal, $V_{mix}$:

$$V_{mix} = a_1(V_{3dB\_1\_M} + V_{3dB\_2\_M}) + a_2(V_{3dB\_1\_M} + V_{3dB\_2\_M})^2 + a_3(V_{3dB\_1\_M} + V_{3dB\_2\_M})^3 + \ldots = \sum_{i=1}^{n} a_i(V_{3dB\_1\_M} + V_{3dB\_2\_M})^i$$

Or expressed in an alternative way:

$$\text{mixed signal, } V_{mix} = \sum_{i=1}^{n} a_i (V_{sum})^i$$

where $V_{sum}$ is the sum of the magnitudes of the signals split from the amplified signal $V_{LNA}$, and the $a_i$ are constants. In an example, more than two signals can be split from the amplified signal.

According to an example, even order mixing is used since it generates a DC signal. More particularly, out of all even order mixing components the second order mixing is typically the most dominant and all other higher order even mixing components can be neglected. Considering only the second order mixing, the DC signal $V_{mix\_dc}$ created at the output of the mixer is equal to:

$$V_{mix\_dc} = V_{DC} = \frac{a_2 \cdot V_{3dB\_1\_M} \cdot V_{3dB\_2\_M}}{2}$$

and is thus equal to the DC signal $V_{DC}$ at the output of a low-pass filter 515 which is used to filter out signals at higher frequencies from the output of the mixer 513.

The parameter $a_2$ is sometimes referred to as "conversion gain" or "conversion loss" and its value is typically smaller than unity. As such, the DC signal $V_{DC}$ is amplified using an operational amplifier 517 to provide an output $V_{OP\_AMP}$.

The DC signal $V_{DC}$ has a time duration that is equal to the duration of the received signal at the antenna, $V_{ant}$. Accordingly, since the time duration a mobile user is present in a particular location is desired (provided by the duration of signal $V_{ant}$), a timing component 519 is provided.

A limiter 521 generates a constant amplitude DC signal 522 to be input for an integrator 523 operable to generate an output voltage signal $V_{int\_out}$ whose amplitude increases with the duration of the constant amplitude DC signal output by the limiter 521, regardless of the power level of the signal, $V_{ant}$, at the antenna terminals, provided that the UE is within the potential estimated radio coverage area of the small cell and subject to calibration as described in more detail below.

The output voltage of the limiter 521 is either 0 (if the input voltage $V_{DC}$ is below a threshold set by a user) or equal to $V_{OP\_AMP}$ (if the input voltage $V_{DC}$ is above a threshold set by a user). In an example, the threshold set by a user for the limiter 521 represents the threshold power value that is determined using a measure of the power of an uplink signal received at the location from a UE in uplink communications with the base station node at the edge of the estimated potential area of radio coverage 410 of the low power node.

In an example, the integrator 523 generates an output signal $V_{int\_out}$ based on the integration of input signal 522. Thus, $V_{int\_out}$ can be represented in terms of $V_{OP\_AMP}$ by:

$$V_{int\_out} = \frac{1}{\tau} \int V_{OP\_AMP} \cdot dt$$

in which $\tau$ represents a time constant that can be adjusted. Since $V_{OP\_AMP}$ is a constant amplitude DC signal, $V_{int\_out}$ is a ramp signal whose amplitude increases with the time duration of the DC signal $V_{OP\_AMP}$ (and causally $V_{ant}$).

The ramp signal $V_{int\_out}$ is continually compared with a reference signal, $V_{ref}$, which is a predefined reference voltage set in accordance with a minimum detection period that is set by a user, using comparator 525. The comparator circuit 525 can be configured so that the output of the comparator circuit $V_{COMP}$ changes when $V_{int\_out} > V_{ref}$. This change is then recorded by a counter 527 which records the presence of the mobile user terminal.

In an example, apparatus 400 includes a switch 409 that is operable to engage apparatus 400 if uplink signal is received at a power that is above the threshold power value. In such a case, a threshold of a limiter device can be set at an appropriate value.

The unwanted, simultaneous presence of a number of users with a low transmit power will not result in detection. This is because the envelopes of RF signals transmitted by each user are random and not correlated. As such, it is statistically very unlikely that these signals will combine constructively (in phase). Even if they combine constructively, they may do so only for a short period of time, which is not long enough to trigger detection.

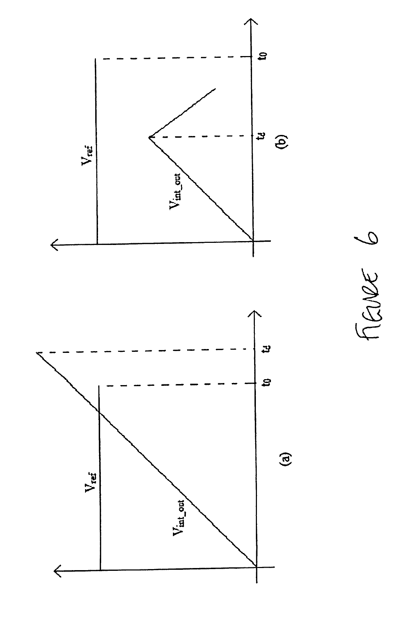

With reference to figure 6, the time interval to represents the time duration that a mobile user needs to be present in the vicinity of a potential small cell (and thus apparatus 400) so as to avoid a measure indicating "false presence" in the indicated area. $V_{ref}$ represents a reference voltage set by a user, against which the voltage at the output of the integrator is compared, while $t_d$ stands for the time duration of the intercepted mobile user signal.

Before deployment, device 500 can be calibrated. In an example, this can be performed by transmitting a signal from the edge of the potential small cell effective radius (such as from the edge of the area 307 as depicted in figure 3 for example) for a duration of $t_0$. The time constant $\tau$ is then set so that a linear the ramp signal is achieved. This is depicted schematically in figure 6, which shows waveforms for $V_{ref}$ and $V_{int\_out}$ in the case of a positive user detection (figure 6a), and a negative user detection (figure 6b).

Then, $V_{ref}$ is set in such a way, so that it is slightly smaller than the value of $V_{int\_out}$ at time instant $t_0$. In the presence of noise the value of $V_{ref}$ can be reduced to allow for a greater safety margin for $V_{int\_out}$. By adjustment of the time constant $\tau$ and reference voltage level, $V_{ref}$, it is possible to correctly determine the presence or absence of a mobile user. Once calibration has been performed for a UE at the edge of the cell, a the UE inside the range of the cell will cause generation a constant DC signal, which will be subsequently integrated, however any spikes or signal bursts at the antenna terminal will not result in detection.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for selecting a position for a low power node in a wireless telecommunications system, the low power node having an estimated potential area of radio coverage at a location within the radio coverage area of a base station node of the system, the method comprising:

receiving an uplink signal from a UE in uplink communications with the base station node at a dummy node at the location; and

incrementing a counter to register the presence of the UE when the power of the received uplink signal exceeds a threshold power value for a predetermined period of time.

2. A method as claimed in claim 1, wherein the threshold power value is determined using a measure of the power of an uplink signal received at the location from a UE in uplink communications with the base station node at the edge of the estimated potential area of radio coverage.

3. A method as claimed in claim 1 or 2, wherein the estimated potential area of radio coverage is determined using: a value for a pilot signal from the base station node at the location and a notional transmit power of the low power node at the location.

4. A method as claimed in any preceding claim, further including using the duration of the received uplink signal to generate a measure representing the total time that the UE is present within the estimated potential area of radio coverage.

5. Apparatus for use in selecting a position for a low power node to be deployed in a wireless telecommunications system, the low power node having an estimated potential area of radio coverage at a location within the radio coverage area of a base station node of the system, the apparatus including:

a receiver at the location to receive an uplink signal from a UE in uplink communications with the base station node; and

a counter to register the presence of the UE if the power of the received uplink signal exceeds a threshold power value for a predetermined period of time.

6. Apparatus as claimed in claim 5, wherein the apparatus includes a mixer to mix multiple components of the received uplink signal to form a mixed signal, and a low pass filter to filter out components of the mixed signal of order higher than second order to generate a DC signal.

7. Apparatus as claimed in claim 6, wherein the mixer is operable to mix the sum of the multiple components to generate a mixed signal according to:

$$\text{mixed signal} = \sum_{i=1}^{n} a_i (V_{sum})^i$$

8. Apparatus as claimed in claim 6 or 7, wherein the mixer is operable to mix two components of equal amplitude and phase split from the received uplink signal using a coupling device.

9. Apparatus as claimed in claim 8, wherein the coupling device is operable to split the received uplink signal into two 3dB signal components $V_{3dB\_1}$ and $V_{3dB\_2}$, the magnitudes of which $V_{3dB\_1\_M}$ and $V_{3dB\_2\_M}$, are values input to the mixer.

10. Apparatus as claimed in any of claims 6 to 9, further including a limiter to generate a constant amplitude DC signal if the DC signal is greater than a threshold voltage value representing a measure of the power of an uplink signal received at the location from a UE in uplink communications with the base station node at the edge of the estimated potential area of radio coverage.

11. Apparatus as claimed in claim 10, further including an integrator operable to generate a variable output voltage signal whose amplitude increases with the duration of the constant amplitude DC signal received from the limiter.

12. Apparatus as claimed in claim 11, further including a comparator to compare the output voltage with a predefined reference voltage, $V_{ref}$, representing the predetermined period of time.

13. Apparatus as claimed in claim 12, wherein the comparator is operable to generate an output if the output voltage is greater than the predefined reference voltage.

14. Apparatus as claimed in any one of claims 11 to 13, wherein the variable output voltage signal of the integrator can be tuned using a time constant.

15. Apparatus as claimed in claim 14, wherein the variable output voltage signal of the integrator is set using the time constant whereby to provide a linear ramp signal as the output.

(a)  (b)  (c)  (d)

103
105
101
101
101
101
105

Small Cell BS, 101
Small Cell Coverage
⊗ Macrocell User, 105
× Small Cell User, 103

FIGURE 1

EP 2 950 598 A1

FIGURE 2

FIGURE 3

EP 2 950 598 A1

Figure 4

EP 2 950 598 A1

EP 2 950 598 A1

501

503

500

505

507 Band-pass filter

509 High gain LNA

511 3-dB coupler

513 Mixer

515 Low-pass filter

517 Operational amplifier

521 Limiter

522

523 Intergrator

525 Comparator

527 Counter circuit

519

$V_{ant}$  $V_{filt}$  $V_{LNA}$  $V_{3dB\_1}$  $V_{3dB\_2}$  $V_{mix}$  $V_{DC}$  $V_{OP\_AMP}$  $V_{DC}$  $V_{int\_out}$  $V_{COMP}$  $V_{ref}$

FIGURE 5

Figure 6

Europäisches
Patentamt

European
Patent Office

Office européen
des brevets

# EUROPEAN SEARCH REPORT

Application Number

EP 14 29 0158

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 1 115 262 A1 (LUCENT TECHNOLOGIES INC [US]) 11 July 2001 (2001-07-11)<br>* page 2, paragraph 0002 - paragraph 0010 *<br>* page 4, paragraph 0018 - paragraph 0026 *<br>* page 6, paragraphs 0036,0039 *<br>* page 7, line 0039 - line 0042 *<br>* page 7, paragraph 0041 *<br>* page 9, paragraph 0045 *<br>* figure 1 * | 1-5<br><br>6-15 | INV.<br>H04W64/00<br><br>ADD.<br>H04W24/02 |
| X<br>A | US 2014/057623 A1 (ZHANG SHUNQING [CN] ET AL) 27 February 2014 (2014-02-27)<br>* page 1, paragraph 0003 *<br>* page 2, paragraph 0023 - page 3, paragraph 0036 *<br>* figures 2,3 * | 1-5<br><br>6-15 | |
| X<br>A | US 8 682 310 B2 (VIKBERG JARI [SE] ET AL) 25 March 2014 (2014-03-25)<br>* page 1, column 1, line 30 - column 2, line 67 *<br>* column 5, line 5 - column 6, line 10 *<br>* column 7, line 7 - column 8, line 2 *<br>* figures 1,3 * | 1-5<br><br>6-15 | TECHNICAL FIELDS SEARCHED (IPC)<br><br>H04W |

The present search report has been drawn up for all claims

| Place of search | Date of completion of the search | Examiner |
|---|---|---|
| Berlin | 9 October 2014 | Carrasco Comes, N |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 14 29 0158

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2014

| Patent document cited in search report | | Publication date | Patent family member(s) | | Publication date |
|---|---|---|---|---|---|
| EP 1115262 | A1 | 11-07-2001 | EP | 1115262 A1 | 11-07-2001 |
| | | | US | 2001016490 A1 | 23-08-2001 |
| US 2014057623 | A1 | 27-02-2014 | CN | 102761902 A | 31-10-2012 |
| | | | EP | 2704493 A1 | 05-03-2014 |
| | | | US | 2014057623 A1 | 27-02-2014 |
| | | | WO | 2012146109 A1 | 01-11-2012 |
| US 8682310 | B2 | 25-03-2014 | EP | 2578013 A1 | 10-04-2013 |
| | | | US | 2011294499 A1 | 01-12-2011 |
| | | | US | 2014155058 A1 | 05-06-2014 |
| | | | WO | 2011161555 A1 | 29-12-2011 |

EPO FORM P0459

For more details about this annex : see Official Journal of the European Patent Office, No. 12/82